# EUROPEAN PATENT APPLICATION

(11) **EP 3 319 312 A1**
(43) Date of publication of application: **09.05.2018**
(21) Application number: 16848798.1
(22) Date of filing: 11.08.2016
(51) Int. Cl.: H04N 5/50, H04N 5/445, H04N 21/482, H04N 21/472, H04N 21/4782, H04N 21/462, H04N 21/443, H04N 21/61

(54) **IMAGE DISPLAY APPARATUS AND OPERATION METHOD THEREFOR**

(30) Priority: 21.09.2015 CN 201510603497
(71) Applicant: Samsung Electronics Co., Ltd., Suwon-si, Gyeonggi-do 16677 (KR)
(72) Inventor: WU, Liang, Nanjing Jiangsu 210012 (CN); XIONG, Zhangliang, Nanjing Jiangsu 210012 (CN); KIM, Do-young, Seoul 06608 (KR); WANG, Lixia, Nanjing Jiangsu 210012 (CN); WANG, Lei, Nanjing Jiangsu 210012 (CN)
(74) Representative: Appleyard Lees IP LLP
(86) International application number: PCT/KR2016/008820
(87) International publication number: WO 2017/052072

(57) **Abstract**

Provided is a method of operating an image display apparatus, the method including receiving a channel packet corresponding to a virtual channel from an external apparatus via a network and storing the received channel packet; obtaining channel attribute information of the virtual channel from the channel packet; and adding the virtual channel to a channel list including a normal channel by using the channel attribute information. The image display apparatus may increase the efficiency of accessing a virtual channel service, by adding and managing a virtual channel without necessitating major interventions of a user.

## Description

### TECHNICAL FIELD

The present invention relates to an image display apparatus that manages a channel list and a method of operating the image display apparatus, and more particularly, to an image display apparatus that adds a virtual channel to a channel list, deletes a virtual channel from the channel list, and updates a virtual channel, and a method of operating the image display apparatus.

### BACKGROUND ART

Channels of a television (TV), which is an image display apparatus, are physical transmission paths respectively allocated to TV broadcasting stations or TV broadcasting networks, or logical numbers respectively representing the physical transmission paths. Frequencies are respectively allocated to numbered display channels. TVs receive broadcasting content provided by a TV broadcasting station or a service provider via a display channel having a relatively fixed channel number according to an allocated frequency. In addition, TVs may provide an online service similar to a channel, namely, Internet content displayed on TV screens, by using a network, in addition to a general TV frequency band signal.

In TVs including normal channels, a receiving device automatically searches for accessed signals within a specific frequency range, and obtains a channel number corresponding to each signal. At this time, the normal channels are fixed to channel numbers allocated according to frequency signals, and many processes are needed to switch between channel numbers. Moreover, channels of Internet smart TVs are all virtual channels, and, in order for network resources corresponding to each of the virtual channels to be reproduced according to a channel switch command, each of the virtual channels should be combined with a pre-allocated channel number. Accordingly, when a channel needs to be added to an image display apparatus, a process of allocating a new channel number to a frequency signal or network resources corresponding to the channel to be added is required. A plurality of human-machine interactions are also required. In addition, as a plurality of manual operations are required, information about an added channel cannot be obtained in real time, and consequently, the efficiency of adding a TV channel decreases.

### DETAILED DESCRIPTION OF THE INVENTION

### TECHNICAL PROBLEM

The present invention provides an image display apparatus that obtains information about an added channel in real time, receives a channel packet corresponding to a virtual channel from an external apparatus via a network and stores the received channel packet in order to increase the efficiency of adding a TV channel, obtains channel attribute information of the virtual channel from the channel packet, and manages a channel list, and a method of operating the image display apparatus.

### TECHNICAL SOLUTION

According to an aspect of the present invention, there is provided a method of operating an image display apparatus, the method including: receiving a channel packet corresponding to a virtual channel from an external apparatus via a network and storing the received channel packet; obtaining channel attribute information of the virtual channel from the channel packet; and adding the virtual channel to a channel list including a normal channel by using the channel attribute information.

### DESCRIPTION OF THE DRAWINGS

FIG. 1 is a schematic diagram illustrating a system that adds a virtual channel to a channel list of an image display apparatus, according to an embodiment.
FIG. 2 is a block diagram of a channel packet according to an embodiment.
FIG. 3 is a flowchart of a method of adding a virtual channel to a channel list of an image display apparatus, according to an embodiment.
FIG. 4 is a flowchart of a method, performed by an image display apparatus, of managing a channel, according to an embodiment.
FIG. 5 is a flowchart of a method, performed by an image display apparatus, of displaying content corresponding to a channel, according to an embodiment.
FIG. 6 illustrates a screen image displayed by an image display apparatus, according to an embodiment.
FIG. 7 illustrates a screen of an image display apparatus on which content is displayed based on resources included in an additional file, according to an embodiment.
FIG. 8 is a block diagram of a structure of an image display apparatus according to an embodiment.
FIG. 9 is a block diagram of a structure of an image display apparatus according to an embodiment.

### BEST MODE

A method of operating an image display apparatus may include: receiving a channel packet corresponding to a virtual channel from an external apparatus via a network and storing the received channel packet; obtaining channel attribute information of the virtual channel from the channel packet; and adding the virtual channel to a channel list including a normal channel by using the channel attribute information.

According to an embodiment, the method may further include receiving, from the external apparatus, a channel packet list including respective channel packet numbers and respective channel names of channel packets stored in the external apparatus; and determining a virtual channel having a channel name included in the received channel packet list but not included in the channel list, by comparing the received channel packet list with the channel list, wherein the receiving of the channel packet corresponding to the virtual channel from the external apparatus via the network and the storing of the received channel packet may include receiving, from the external apparatus, a channel packet corresponding to the virtual channel having the channel name included in the received channel packet list but not included in the channel list and storing the received channel packet.

The adding of the virtual channel to the channel list including the normal channel by using the channel attribute information may further include: determining whether a channel number of the virtual channel is included in the channel list; and transmitting an error message to the external apparatus when the channel number is included in the channel list.

According to an embodiment, the method may further include: obtaining, from the channel packet, a plug-in instance for displaying content corresponding to the virtual channel; receiving a channel switch command requesting to switch to the virtual channel; and displaying the content corresponding to the virtual channel by executing the plug-in instance, in response to the channel switch command.

The method may further include: receiving a channel switch command requesting to switch to the virtual channel; determining whether the channel packet corresponding to the virtual channel has been updated; and receiving the channel packet from the external apparatus again and updating the re-received channel packet, when the channel packet has been updated.

The determining of whether the channel packet has been updated may be determining whether the channel packet has been updated, by using a channel packet number included in the channel packet.

According to an embodiment, the method may further include: receiving, from the external apparatus, a channel packet list including respective channel packet numbers and respective channel names of channel packets stored in the external apparatus; and deleting the channel packet and removing the virtual channel from the channel list, when a channel name included in the received and stored channel packet is not included in the received channel packet list.

According to an embodiment, the channel attribute information may include a reproduction time period of content corresponding to the virtual channel, and the method may further include: receiving a channel switch command requesting to switch to the virtual channel; and displaying the content corresponding to the virtual channel, based on the reproduction time period, in response to the channel switch command.

The method may further include displaying the channel attribute information including at least one of a channel icon, a channel number, a channel name, and a reproduction time period.

According to an embodiment, the method may further include: obtaining an additional file of the virtual channel from the channel packet; and displaying content corresponding to the virtual channel, based on resources included in the additional file.

An image display apparatus may include: a communication interface configured to receive a channel packet corresponding to a virtual channel from an external apparatus via a network; a controller configured to obtain channel attribute information of the virtual channel from the channel packet and add the virtual channel to a channel list including a normal channel by using the channel attribute information; and a storage configured to store the channel packet and the channel attribute information.

According to an embodiment, the communication interface may be further configured to receive from the external apparatus a channel packet list including respective channel packet numbers and respective channel names of channel packets stored in the external apparatus, and the controller may be further configured to determine a virtual channel having a channel name included in the received channel packet list but not included in the channel list, by comparing the received channel packet list with the channel list, and to control the communication interface to receive, from the external apparatus, a channel packet corresponding to the determined virtual channel.

The image display apparatus may further include a display configured to display content corresponding to the virtual channel, wherein the controller may be further configured to obtain, from the channel packet, a plug-in instance for displaying the content corresponding to the virtual channel, execute the plug-in instance, and control the display to display the content corresponding to the virtual channel.

The image display apparatus may further include a user input interface configured to receive a channel switch command requesting to switch to the virtual channel, wherein the controller may be further configured to determine whether the channel packet corresponding to the virtual channel has been updated, control the communication interface to receive the channel packet from the external apparatus again, when the channel packet has been updated, and control the storage to store the re-received channel packet.

According to an embodiment, the controller may determine whether the channel packet has been updated, by using a channel packet number included in the channel packet.

According to an embodiment, the communication interface may receive from the external apparatus a channel packet list including respective channel packet numbers and respective channel names of channel packets stored in the external apparatus, and, when a channel name included in the downloaded channel packet is not included in the received channel packet list, the controller may delete the channel packet and remove the virtual channel from the channel list.

The image display apparatus may further include the display configured to display the content corresponding to the virtual channel, the channel attribute information may include a reproduction time period of the content corresponding to the virtual channel, and the controller may control the display to display the content corresponding to the virtual channel, based on the reproduction time period.

According to an embodiment, the display may display channel attribute information including at least one of the channel icon, the channel number, the channel name, and the reproduction time period.

The image display apparatus may further include the display configured to display the content corresponding to the virtual channel, and the controller may obtain an additional file of the virtual channel from the channel packet and may control the display to display the content corresponding to the virtual channel, based on resources included in the additional file.

According to an embodiment, there is provided a non-transitory computer-readable recording medium having recorded thereon at least one program including commands for performing a method of operating the image display apparatus, the method including receiving a channel packet corresponding to a virtual channel from an external apparatus via a network and storing the received channel packet; obtaining channel attribute information of the virtual channel from the channel packet; and adding the virtual channel to a channel list including a normal channel by using the channel attribute information.

### MODE OF THE INVENTION

Hereinafter, the terms used in the specification will be briefly described, and then the present invention will be described in detail.

Although general terms widely used at present were selected for describing the present invention in consideration of the functions thereof, these general terms may vary according to intentions of one of ordinary skill in the art, case precedents, the advent of new technologies, and the like. Terms arbitrarily selected by the applicant of the present invention may also be used in a specific case. In this case, their meanings need to be given in the detailed description of the invention. Hence, the terms must be defined based on their meanings and the contents of the entire specification, not by simply stating the terms.

The terms "comprises" and/or "comprising" or "includes" and/or "including" when used in this specification, specify the presence of stated elements, but do not preclude the presence or addition of one or more other elements. The terms "...unit" and "... module" when used in this specification refers to a unit in which at least one function or In operation is performed, and may be implemented as hardware, software, or a combination of hardware and software.

Throughout the specification, an image display apparatus may be a television (TV), but this is merely an embodiment. The image display apparatus may be implemented as an electronic device including a channel for displaying various pieces of content. For example, the image display apparatus may be any type of electronic device, such as a mobile phone, a tablet personal computer (PC), a digital camera, a camcorder, a laptop computer, a desktop computer, an e-book terminal, a digital broadcast terminal, a personal digital assistant (PDA), a portable multimedia player (PMP), a navigation device, an MP3 player, or a wearable device. In particular, embodiments may be easily implemented in electronic devices that display content via a channel switching command because a channel number is set for each channel, like a TV. However, embodiments are not limited thereto.

Throughout the specification, a normal channel may mean a channel that receives a digital or analog signal transmitted by the image display apparatus via terrestrial broadcasting or satellite communication. In addition, the normal channel is a concept distinguishable from a virtual channel, and the virtual channel may mean a channel that receives a network signal by using an online network. For example, channels provided by analog TVs and digital TVs may be considered as normal channels, and channels via which smart TVs, IPTVs, and Internet TVs, having an Internet connection function in addition to the functions of analog TVs and digital TVs, provide online content may be considered as virtual channels.

Embodiments are described in detail herein with reference to the accompanying drawings so that this disclosure may be easily performed by one of ordinary skill in the art to which the present invention pertain. The present disclosure may, however, be embodied in many different forms and should not be construed as being limited to the embodiments set forth herein. In the drawings, parts irrelevant to the description are omitted for simplicity of explanation, and like numbers refer to like elements throughout.

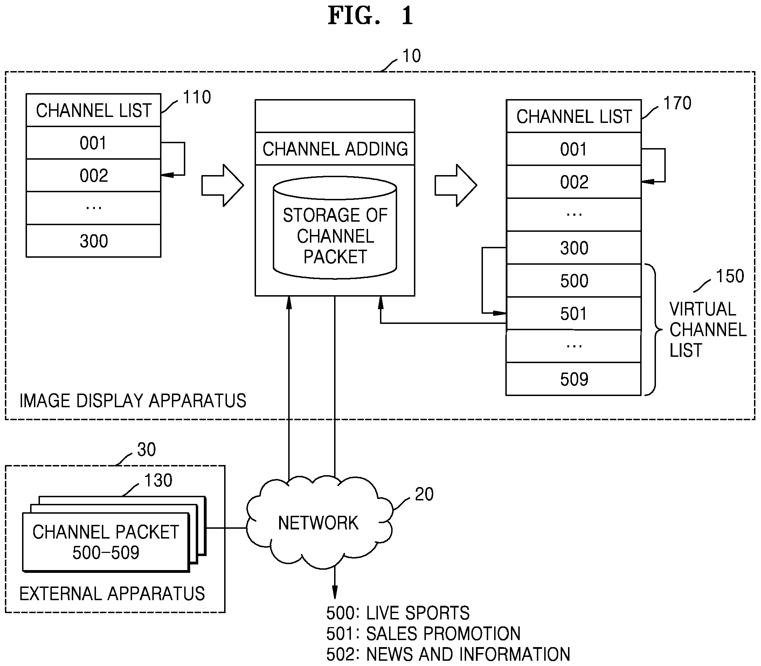

FIG. 1 is a schematic diagram illustrating a system that adds a virtual channel to a channel list of an image display apparatus, according to an embodiment.

According to an embodiment, a channel list 110 of an image display apparatus 10 may include normal channels. For example, the channel list 110 of the image display apparatus 10 may include normal channels having channel numbers 001 through 300, as shown in FIG. 1. According to an embodiment, a channel switch between the normal channels may be executed according to a channel switch command. For example, as shown in FIG. 1, a channel switch from the normal channel 001 to the normal channel 002 may be performed.

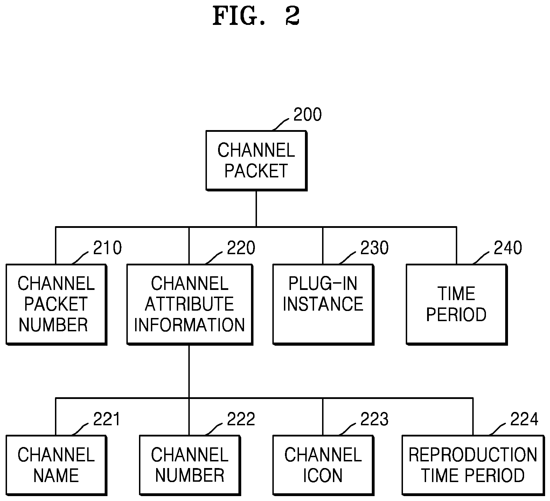

According to an embodiment, an external apparatus 30 may store channel packets 130 created by a content provider. According to an embodiment, the external apparatus 30 may be a kind of server, but embodiments are not limited thereto. According to an embodiment, the channel packets 130 are data including information about virtual channels. The channel packets 130 may include information used to display content corresponding to the virtual channels, and information used to describe the attributes of the virtual channels. For example, the image display apparatus 10 may add virtual channels, based on the data included in the channel packets 130. Each channel packet will be described in greater detail later with reference to FIG. 2.

According to an embodiment, the channel packets 130 corresponding to the virtual channels may be created by a content provider and may include resources corresponding to content. The virtual channels may correspond to different channel packets, and each of the channel packets may be created by at least one content provider. According to an embodiment, a content provider may provide a virtual channel service that selects content and displays customized content. For example, as shown in FIG. 1, a virtual channel 500 may provide live sports broadcasting, a virtual channel 501 may provide sales promotion broadcasting, and a virtual channel 502 may provide news and information broadcasting. Content of the virtual channels 500 through 502 may be provided by the same content provider or different content providers.

According to an embodiment, the image display apparatus 10 may receive the channel packets 130 stored in the external apparatus 30 via a network 20 and store the received channel packets 130. The image display apparatus 10 may add virtual channels corresponding to the stored channel packets to the image display apparatus 10.

According to an embodiment, the network 20 may be implemented as a wired network, such as a local area network (LAN), a wide area network (WAN), or a value added network (VAN), or any kind of wireless network, such as a satellite communication network.

According to an embodiment, when virtual channels are added to the image display apparatus 10, a virtual channel list 150 including the added virtual channels may be created. The image display apparatus 10 may create an overall channel list 170 by combining the virtual channel list 150 with a channel list of the image display apparatus 10. For example, as shown in FIG. 1, channels 001 through 300 of the overall channel list 170 may include information about normal channels, and channels 500 through 509 thereof may include information about the added virtual channels. According to an embodiment, in response to a channel switch command, the image display apparatus 10 may determine whether a target channel is a normal channel or a virtual channel, and may perform an operation for a channel switch. The target channel means a channel that a user wants to switch.

In an image display apparatus according to an embodiment, a channel switch between normal channels may be performed equally before and after virtual channels are included in a channel list.

According to an embodiment, in response to a channel switch command of requesting a channel switch to a virtual channel, the image display apparatus 10 may perform a channel switch to the requested virtual channel. According to an embodiment, when the target channel is a virtual channel, the image display apparatus 10 may search for channel information of the virtual channel and determine whether the virtual channel has been terminated or updated.

According to an embodiment, the image display apparatus 10 may execute a plug-in instance of the virtual channel and may display content corresponding to the virtual channel by using a TV player or a local graphic system, by using read local or network resources.

In the system according to the present disclosure, the image display apparatus 10 may be connected to the external apparatus 30 via the network 20 and may add a virtual channel in a background state without intervention of a user and manage the added virtual channel. Accordingly, a human-machine interaction and a plurality of manual operations are not required, and the image display apparatus 10 may obtain information about added channels without firmware upgrading in real time, and consequently, efficiency of a process of adding a channel may increase.

FIG. 2 is a block diagram of a channel packet according to an embodiment.

As sown in FIG. 2, a channel packet 200 according to an embodiment is data including information about a virtual channel. For example, the image display apparatus 10 may use the channel packet 200 in order to manage the virtual channel. The channel packet 200 may include at least one of a channel packet number 210, channel attribute information 220, and a plug-in instance 230.

According to an embodiment, the channel packet number 210 indicates a version of the channel packet 200. When the version of the channel packet 200 is updated, the channel packet number 210 may be changed. According to an embodiment, the image display apparatus 10 may determine whether the channel packet 200 has been updated, according to whether the channel packet number 210 is changed. The image display apparatus 10 may receive and store the updated channel packet 200 and may updatethe channel packet 200.

According to an embodiment, the channel attribute information 220 indicates attributes of the virtual channel. The channel attribute information 220 may include, but is not limited to, a channel name 221, a channel number 222, a channel icon 223, and a reproduction time period 224.

According to an embodiment, the channel name 221 is a unique identifier of the virtual channel. The channel name 221 may be generated by a content provider.

According to an embodiment, the channel number 222 identifies each virtual channel. For example, the channel number 222 may be used for a channel switch.

According to an embodiment, the channel icon 223 means a figure, an image, a text, or the like that implies the contents of information of a channel such that people may ascertain the information at a glance. The channel icon 208 may intuitively represent the information of the channel. For example, the channel icon 223 may be a figure, an image, or a text representing a content provider, such as a TV station logo of a normal channel. The channel icon 223 may also be a figure, an image, or a text representing information about content.

According to an embodiment, the reproduction time period 224 represents a time period during which the image display apparatus 10 can display content corresponding to a corresponding channel. For example, when the reproduction time period 224 lapses, the image display apparatus 10 is unable to display the content of the corresponding channel.

According to an embodiment, the plug-in instance 230 is a plug-in file that is executed by the image display apparatus 10 in order to display content corresponding to the virtual channel. The plug-in instance 230 is a script-based executable plug-in file. According to an embodiment, when the image display apparatus 10 starts to operate, the image display apparatus 10 may execute the plug-in instance 230. The plug-in instance 230 may operate various functions provided by the components of the image display apparatus 10, such as a network, a player, a file system, and a graphics system. According to an embodiment, the plug-in instance 230 may call a playing function of the image display apparatus 10 in order to display content corresponding to a virtual channel added to the image display apparatus 10. The image display apparatus 10 may read local resources or network resources and display the content corresponding to the virtual channel by using a TV player or a local graphic system.

According to an embodiment, the script-based plug-in instance 230 may not be fixed to firmware of the image display apparatus 10. For example, when a plurality of image display apparatuses 10 have different firmware, the script-based plug-in instance 230 may be executed in the plurality of image display apparatuses 10 regardless of the type of firmware. The image display apparatus 10 may display content corresponding to the plug-in instance 230.

According to an embodiment, the channel packet 200 may further include an additional file 240. The additional file 240 may include resources for displaying the content corresponding to the virtual channel. For example, the additional file 240 may include resources, such as pictures or videos, necessary for displaying the content corresponding to the virtual channel. According to an embodiment, the additional file 240 may also include resources for displaying other content related to the content corresponding to the virtual channel. For example, the additional file 240 may include resources corresponding to video on demand (VOD) content, such as a highlight image and other related images regarding the content corresponding to the virtual channel.

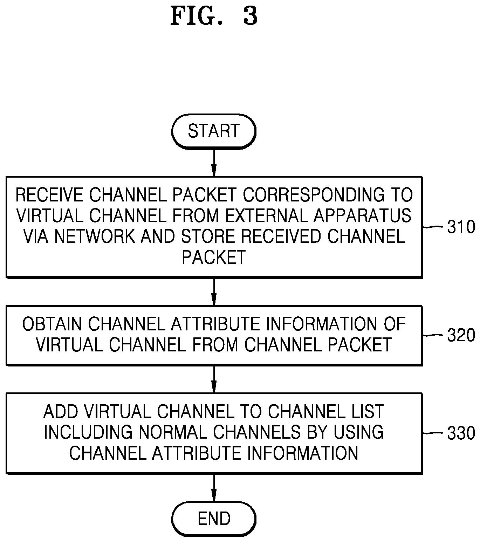

FIG. 3 is a flowchart of a method of adding a virtual channel to a channel list of an image display apparatus, according to an embodiment.

Referring to FIG. 3, in operation 310, the image display apparatus 10 may receive a channel packet corresponding to a virtual channel from the external apparatus 30 via the network 20 and may store the received channel packet. According to an embodiment, the external apparatus 30 may store a channel packet provided by a content provider. In addition, the external apparatus 30 may respond to a request from the image display apparatus 10 to obtain information about the channel packet. The channel packet may be transmitted to the image display apparatus 10 via a WAN and a LAN.

In operation 320, the image display apparatus 10 may obtain channel attribute information of the virtual channel from the channel packet. According to an embodiment, the image display apparatus 10 may analyze the stored channel packet in order to obtain the channel attribute information from the channel packet. The channel attribute information may include, but is not limited to, a channel name and a channel number.

In operation 330, the image display apparatus 10 may add the virtual channel to a channel list including normal channels by using the channel attribute information. According to an embodiment, the image display apparatus 10 may add the virtual channel to the channel list by using the channel name or the channel number included in the obtained channel attribute information. According to an embodiment, the channel list of the image display apparatus 10 may include all channels displayable on the image display apparatus 10, namely, not only the normal channels but also added virtual channels.

According to an embodiment, the channel list of the image display apparatus 10 may include channel numbers, channel names, channel icons, channel packets, and the like respectively corresponding to virtual channels displayable on the image display apparatus 10.

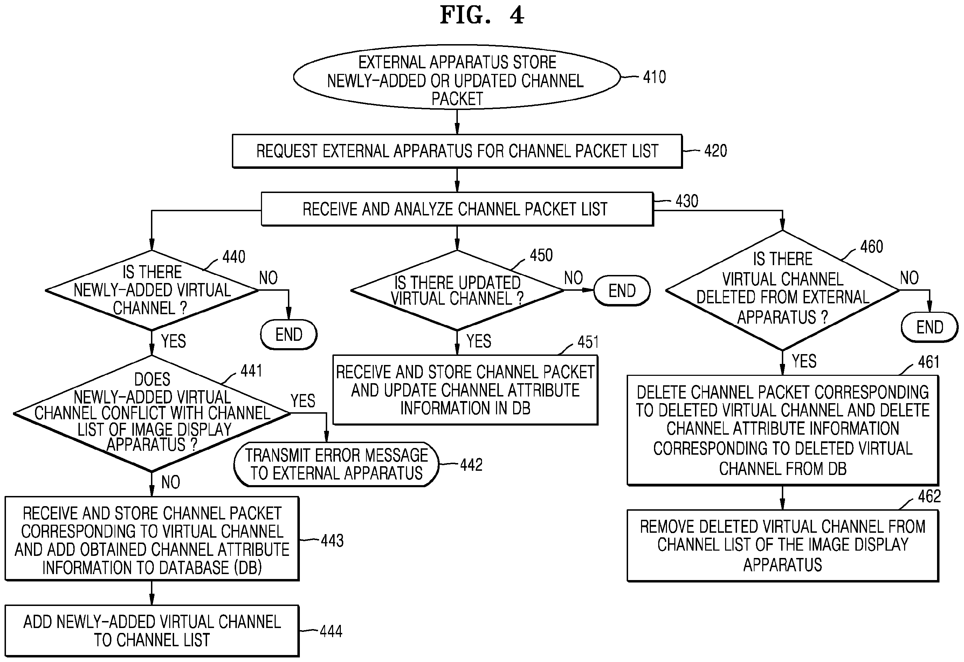

FIG. 4 is a flowchart of a method, performed by an image display apparatus, of managing a channel, according to an embodiment.

Referring to FIG. 4, in operation 410, the external apparatus 30 may store a newly-added or updated channel packet. The external apparatus 30 may wait for a request from the image display apparatus 10. According to an embodiment, the external apparatus 30 may create a channel packet list including information about channel packets stored in the external apparatus 30. According to an embodiment, the channel packet list may include, but is not limited to, respective channel packet numbers and respective channel names of the channel packets stored in the external apparatus 30.

In operation 420, the image display apparatus 10 may request the external apparatus 30 for the channel packet list. According to an embodiment, the image display apparatus 10 may request the external apparatus 30 for the channel packet list after being powered on and smoothly connects to the network 20.

In operation 430, the image display apparatus 10 may receive the channel packet list from the external apparatus 30 via the network 20 and analyze the received channel packet list. According to an embodiment, the image display apparatus 10 may obtain the respective channel packet numbers, the respective channel names, and the like of the channel packets from the received channel packet list. According to an embodiment, the image display apparatus 10 may compare the received channel packet list with the channel list of the image display apparatus 10. For example, the image display apparatus 10 may compare the channel names obtained from the channel packet list with the channel names included in the channel list of the image display apparatus 10. The image display apparatus 10 may also compare the channel packet numbers obtained from the channel packet list with the channel packets stored in the image display apparatus 10 or the channel packet numbers included in the channel list of the image display apparatus 10.

In operation 440, the image display apparatus 10 may determine whether there is a newly-added virtual channel. According to an embodiment, by comparing the received channel packet list with the channel list of the image display apparatus 10, the image display apparatus 10 may determine a virtual channel having a channel name included in the received channel packet list but not included in the channel list of the image display apparatus 10. The virtual channel having a channel name included in the received channel packet list but not included in the channel list of the image display apparatus 10 may be determined to be a newly-added virtual channel.

In operation 441, when it is determined in operation 440 that there is a newly-added virtual channel, the image display apparatus 10 may determine whether the newly-added virtual channel conflicts with the channel list of the image display apparatus 10. According to an embodiment, when a channel number of the newly-added virtual channel is previously included in the channel list of the image display apparatus 10, it may be determined that the channel number of the newly-added virtual channel conflicts with a channel number stored in the image display apparatus 10. According to an embodiment, when the channel number of the newly-added virtual channel is not included in the channel list of the image display apparatus 10, it may be determined that the channel number of the newly-added virtual channel does not conflict with the channel number stored in the image display apparatus 10.

In operation 442, when it is determined in operation 441 that the newly-added virtual channel conflicts with the channel list of the image display apparatus 10, the image display apparatus 10 may transmit an error message to the external apparatus 30. According to an embodiment, when the external apparatus 30 receives the error message from the image display apparatus 10, the channel packet may be adjusted. According to an embodiment, the image display apparatus 10 may not transmit the error message to the external apparatus 30 and may only interrupt a channel adding operation.

According to an embodiment, operation 441 and operation 442 may be omitted.

In operation 443, the image display apparatus 10 may receive a channel packet corresponding to the virtual channel from the external apparatus 30 and may store the received channel packet. According to an embodiment, the image display apparatus 10 may obtain channel attribute information from the stored channel packet and may add the obtained channel attribute information to database (DB).

In operation 444, the image display apparatus 10 may add the newly-added virtual channel to the channel list. According to an embodiment, as a result of the above-described virtual channel adding operation, the channel list of the image display apparatus 10 may include all channels displayable on the image display apparatus 10, namely, not only normal channels but also added virtual channels. According to an embodiment, the virtual channel added to the channel list of the image display apparatus 10 may be a target of a channel switch command, and content corresponding to the virtual channel may be displayed.

According to an embodiment, before adding the newly-added virtual channel to the channel list of the image display apparatus 10, the image display apparatus 10 may determine whether the channel number of the virtual channel is previously included in the channel list of the image display apparatus 10. When the channel number is previously included in the channel list, the image display apparatus 10 may transmit an error message to the external apparatus 30.

In operation 450, the image display apparatus 10 may determine whether there is an updated virtual channel. According to an embodiment, when there is a virtual channel having a channel name included in both the channel packet list and the channel list of the image display apparatus 10, the image display apparatus 10 may determine whether a channel packet corresponding to the virtual channel has been updated. According to an embodiment, the image display apparatus 10 may determine whether the channel packet is updated, by using a channel packet number included in the channel packet. When the channel packet is updated, a new channel packet may be stored in the external apparatus 30, or the channel packet may be directly updated in the external apparatus 30. A channel packet number of the updated channel packet may also be updated. By comparing the channel packet number of the channel packet stored in the external apparatus 30 with the channel packet number of the channel packet stored in the image display apparatus 10, the image display apparatus 10 may determine whether the channel packet is updated.

In operation 451, when the channel packet corresponding to the virtual channel is updated in operation 450, the image display apparatus 10 may receive the channel packet from the external apparatus 30 again and may update the received channel packet. According to an embodiment, the image display apparatus 10 may store the re-received channel packet, and may update channel attribute information obtained from the updated channel packet in the DB. Content corresponding to the virtual channel displayed on the image display apparatus 10 may be changed after the channel packet is updated. According to an embodiment, the above-described updating may be performed via an online network in real time.

In operation 460, the image display apparatus 10 may determine whether there is a virtual channel deleted from the external apparatus 30. According to an embodiment, when a channel name included in a channel packet stored in the image display apparatus 10 is no longer included in the channel packet list received from the external apparatus 30, the image display apparatus 10 may determine a virtual channel having the channel name to be a deleted virtual channel.

In operation 461, when the virtual channel is determined to be the virtual channel deleted from the external apparatus 30 in operation 460, the image display apparatus 10 may delete a channel packet corresponding to the deleted virtual channel. According to an embodiment, the image display apparatus 10 may delete channel attribute information corresponding to the deleted virtual channel from the DB.

In operation 462, the image display apparatus 10 may remove the deleted virtual channel from the channel list of the image display apparatus 10. Accordingly, a channel deleted from the external apparatus 30 may not be selected from the channel list of the image display apparatus 10 any longer, and content corresponding to the deleted channel may not be displayed on the image display apparatus 10.

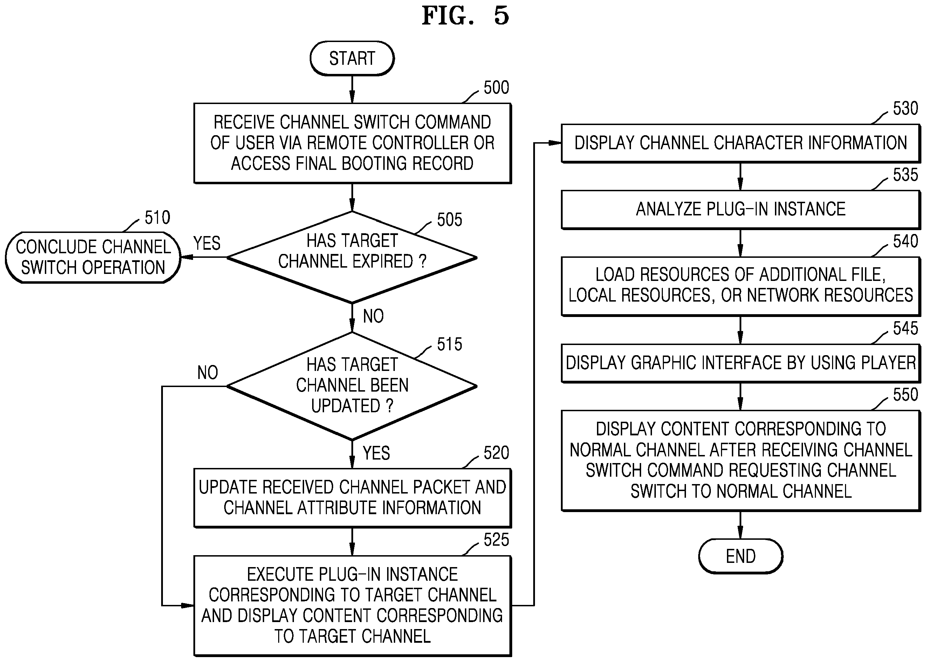

FIG. 5 is a flowchart of a method, performed by an image display apparatus, of displaying content corresponding to a channel, according to an embodiment.

In operation 500, the image display apparatus 10 may receive a channel switch command of a user via a remote controller or access a final booting record. According to an embodiment, the channel switch command received via the remote controller may include all cases in which the user presses a button on the remote controller to select a channel. For example, a virtual channel may be selected by the user pressing a channel-up/down button on the remote controller, or by the user pressing directly a number button on the remote controller that corresponds to a channel number of the virtual channel. However, embodiments are not limited thereto. A channel switch to a virtual channel is the same as a channel switching method for normal channels, and the user may select a virtual channel according to an existing method.

According to an embodiment, a virtual channel may be stored in the last booting record of the image display apparatus 10. When the image display apparatus 10 is turned on, the image display apparatus 10 may access the final booting record and select a virtual channel, and may display content corresponding to the virtual channel. A channel to which the user is to switch a current channel or a channel selected by the final booting record may be a target channel via which the image display apparatus 10 desires to display content.

In operation 505, the image display apparatus 10 may determine whether the target channel expires. According to an embodiment, channel attribute information of the virtual channel may include a reproduction time period, and the image display apparatus 10 may display content corresponding to the virtual channel, based on the reproduction time period. The image display apparatus 10 may check the reproduction time period from the channel attribute information, and may determine whether the virtual channel expires, according to whether the reproduction time period has lapsed.

According to an embodiment, when the image display apparatus 10 receives the channel switch command via the remote controller or accesses the final booting record and selects the target channel, the image display apparatus 10 may determine whether the target channel has been deleted. According to an embodiment, when the target channel has been deleted, the image display apparatus 10 may not determine whether the virtual channel expires, and may interrupt a channel switch operation.

In operation 510, when it is determined in operation 505 that the target channel expires, the image display apparatus 10 may conclude the channel switch operation. According to an embodiment, when the target channel expires, the image display apparatus 10 may determine whether a channel packet corresponding to the target channel has been deleted from the external apparatus 30. When the channel packet has been deleted from the external apparatus 30, the image display apparatus 10 may delete the channel packet corresponding to the target channel, and may delete channel attribute information corresponding to the target channel from the DB of the image display apparatus 10.

In operation 515, the image display apparatus 10 may determine whether the target channel has been updated. According to an embodiment, in order to determine whether a version of a channel packet stored in the image display apparatus 10 has been synchronized with a version of a channel packet stored in the external apparatus 30, the image display apparatus 10 may request the external apparatus 30 for update information of the target channel. According to an embodiment, the image display apparatus 10 may determine whether the target channel has been updated, by using a channel packet number included in the channel packet.

In operation 520, when it is determined in operation 515 that the target channel has been updated, the image display apparatus 10 may receive the channel packet from the external apparatus 30 again and may update the received channel packet. According to an embodiment, the image display apparatus 10 may store the re-received channel packet and may update channel attribute information obtained from the updated channel packet in the DB.

In operation 525, when it is determined in operation 515 that the target channel does not need to be updated or the target channel is updated in operation 520, the image display apparatus 10 may execute a plug-in instance corresponding to the target channel and may display content corresponding to the target channel. According to an embodiment, the image display apparatus 10 may record as an index a location where a plug-in instance corresponding to each virtual channel is stored. For example, the image display apparatus 10 may search for the plug-in instance corresponding to the virtual channel according to the index and may execute the found plug-in instance.

In operation 530, the image display apparatus 10 may display the channel character information. According to an embodiment, the channel attribute information may include a channel icon, a channel number, a channel name, a reproduction time period, and the like. The image display apparatus 10 may obtain the channel attribute information stored in the DB and may display the obtained channel attribute information. According to an embodiment, the image display apparatus 10 may display content corresponding to a virtual channel on a portion of the screen of the image display apparatus 10, and may display channel attribute information of the virtual channel on another portion of the screen.

In operation 535, the image display apparatus 10 may analyze the plug-in instance. According to an embodiment, the image display apparatus 10 may obtain the plug-in instance by using an index in which a location where the plug-in instance is stored is recorded. According to an embodiment, the image display apparatus 10 may execute a script of the plug-in instance and may display the content via an allocated full screen window.

In operation 540, the image display apparatus 10 may load resources of an additional file, local resources, or network resources in order to display the content corresponding to the virtual channel. According to an embodiment, when the content corresponding to the virtual channel is included in the additional file, the image display apparatus 10 may directly load an additional file stored in the image display apparatus 10 and may display the content. For example, the additional file may include resources, such as pictures or videos, necessary for displaying the content corresponding to the virtual channel. According to an embodiment, when there is a need to display a network resource via the virtual channel, the image display apparatus 10 may obtain the network resource via a network and may display content corresponding to the network resource.

In operation 545, the image display apparatus 10 may display a graphic interface by using a player. According to an embodiment, the player may be a self function of the image display apparatus 10. According to an embodiment, the image display apparatus 10 may display the graphic interface by using a file system, a graphic system, or the like besides the player. The image display apparatus 10 may display a virtual effect that enables an interaction for a user via the graphic interface.

In operation 550, when the image display apparatus 10 receives a channel switch command requesting a channel switch to a normal channel, the image display apparatus 10 may display content corresponding to the normal channel. According to an embodiment, when a virtual channel is switched to a normal channel, a channel window that is displaying content corresponding to the current virtual channel may be terminated, and the image display apparatus 10 may call a function of displaying content corresponding to the normal channel.

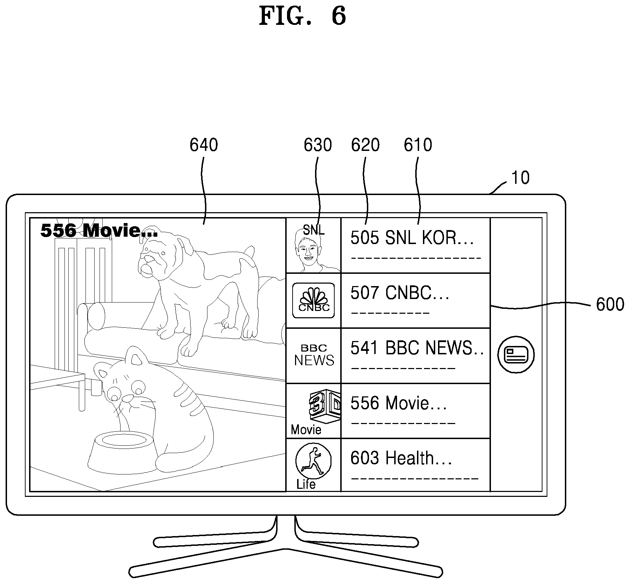

FIG. 6 illustrates a screen image displayed by an image display apparatus, according to an embodiment.

As shown in FIG. 6, the image display apparatus 10 may display channel character information 600 of a virtual channel. According to an embodiment, the channel attribute information 600 may include a channel name 610, a channel number 620, and a channel icon 630, and the image display apparatus 10 may display at least one of the channel name 610, the channel number 620, and the channel icon 630. According to an embodiment, the image display apparatus 10 may display content 640 corresponding to the virtual channel on a portion of the screen of the image display apparatus 10, and may display the channel attribute information 600 of the virtual channel on the other portion of the screen. According to an embodiment, the channel attribute information 600 displayed by the image display apparatus 10 may be regarding not only a virtual channel via which current content is being displayed but also other virtual channels selectable by a channel switch command.

According to an embodiment, in response to a channel switch command of requesting a channel switch to the virtual channel, the image display apparatus 10 may display the channel attribute information 600 in response to the channel switch command. According to an embodiment, when a preset button of a remote controller is pressed by a user, the image display apparatus 10 may display the channel attribute information 600.

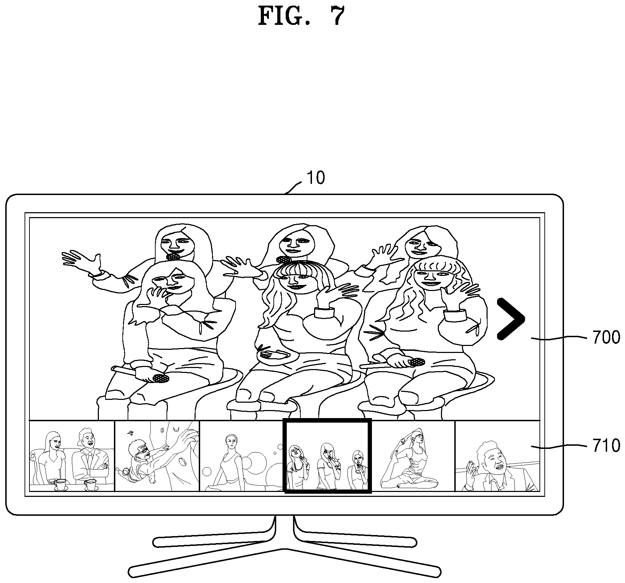

FIG. 7 illustrates a screen of an image display apparatus on which content is displayed based on resources included in an additional file, according to an embodiment.

According to an embodiment, as shown in FIG. 7, the image display apparatus 10 may display content 700 corresponding to a virtual channel, based on resources included in an additional file. According to an embodiment, the image display apparatus 10 may obtain an additional file of the virtual channel from a channel packet and may display the content 700 corresponding to the virtual channel, based on resources included in the additional file. For example, the content 700 corresponding to the virtual channel may be content that the virtual channel desires to display.

According to an embodiment, the additional file may include resources for displaying other content 710 related to the content corresponding to the virtual channel. For example, the additional file may include resources corresponding to VOD content, such as a highlight image and other related images regarding the content 700 corresponding to the virtual channel. For example, as shown in FIG. 7, when the image display apparatus 10 is displaying the content 700 corresponding to the virtual channel, the image display apparatus 10 may display a highlight image or the like, which is the content 710 related to the content 700.

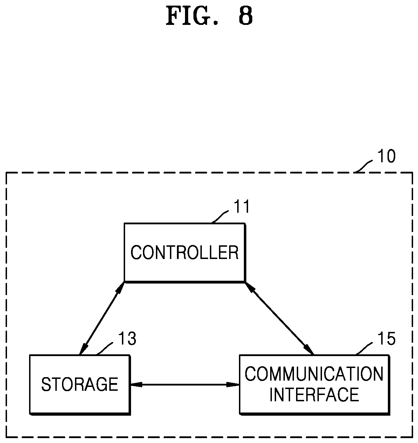

FIG. 8 is a block diagram of a structure of an image display apparatus according to an embodiment.

Referring to FIG. 8, the image display apparatus 10 according to an embodiment may include a communication interface 15, a storage 13, and a controller 11.

According to an embodiment, the communication interface 15 may connect the image display apparatus 10 to the external apparatus 30 under the control of the controller 11. The controller 11 may transmit/receive content to/from the external apparatus 30 connected via the communication interface 15, download an application from the external apparatus 30, or perform web-browsing. The communication interface 15 may include a wireless LAN, a Bluetooth network, or a wired Ethernet network in correspondence to a performance and a structure of the image display apparatus 10.

For example, the communication interface 15 may receive a channel packet corresponding to a virtual channel from the external apparatus 30 via the network 20. According to an embodiment, the channel packet is data including information about the virtual channel. The channel packet may include, but is not limited to, a channel packet number, channel attribute information, and a plug-in instance.

According to an embodiment, the communication interface 15 may receive from the external apparatus 30 a channel packet list including respective channel packet numbers and respective channel names of the channel packets stored in the external apparatus 30. According to an embodiment, the communication interface 15 may receive a channel packet corresponding to a virtual channel having a channel name included in the channel packet list determined by the controller 11 but not included in a channel list from the external apparatus 30.

According to an embodiment, the storage 13 may store various data, programs, or applications for driving and controlling the image display apparatus 10 under the control of the controller 11. The storage 13 may store input/output signals or data that respectively correspond to operations of the communication interface 15, a display 12, and a user input interface 14. The storage 13 may store a control program for controlling the image display apparatus 10 and the controller 11, an application initially provided by a manufacturer or downloaded from outside the image display apparatus 10, a graphical user interface (GUI) associated with the application, objects (for example, an image text, an icon, and a button) for providing the GUI, user information, a document, databases, or related pieces of data. For example, the storage 13 may store a channel packet and channel attribute information corresponding to a virtual channel. According to an embodiment, the storage 13 may provide the controller 11 with the stored channel packet and stored channel attribute information such that the controller 11 may perform a channel managing operation.

According to an embodiment, the term "storage" includes the storage 13, the ROM or the RAM of the controller 11, or a memory card (e.g., a micro SD card or a USB memory) mounted in the image display apparatus 10. The storage 13 may include a non-volatile memory, a volatile memory, a hard disk drive (HDD), or a solid state drive (SSD).

According to an embodiment, the storage 13 may record as an index a location where a plug-in instance included in a channel packet corresponding to each virtual channel is stored, by using DB. For example, the storage 13 may provide data such that the controller 11 may search for a plug-in instance corresponding to a target channel according to the index.

According to an embodiment, the controller 11 may control the storage 13 to store various data, programs, or applications for driving and controlling the image display apparatus 10. The controller 11 may control the communication interface 15 to connect the image display apparatus 10 to the external apparatus 30. For example, the controller 11 may request the external apparatus 30 for a channel packet list and a channel packet and may control the communication interface 15 to perform updating and searching. The controller 11 may also control the storage 13 to store the obtained data.

According to an embodiment, the controller 11 may obtain the channel attribute information of the virtual channel from the received channel packet, and may add the virtual channel to a channel list including normal channels by using the channel attribute information. According to an embodiment, the channel attribute information may include, but is not limited to, a channel name, a channel number, and a channel icon.

According to an embodiment, by comparing the received channel packet list with the channel list of the image display apparatus 10, the controller 11 may determine a virtual channel having a channel name included in the received channel packet list but not included in the channel list of the image display apparatus 10. The controller 11 may determine the virtual channel having a channel name included in the received channel packet list but not included in the channel list of the image display apparatus 10 to be a newly-add channel.

According to an embodiment, when there is a newly-added virtual channel, the controller 11 may determine whether the virtual channel conflicts with the channel list of the image display apparatus 10. According to an embodiment, when a channel number of the newly-added virtual channel is previously included in the channel list of the image display apparatus 10, it may be determined that the channel number of the newly-added virtual channel conflicts with a channel number stored in the image display apparatus 10. According to an embodiment, when the channel number of the newly-added virtual channel is not included in the channel list of the image display apparatus 10, it may be determined that the channel number of the newly-added virtual channel does not conflict with a channel number stored in the image display apparatus 10.

According to an embodiment, when the newly-added virtual channel conflicts with the channel list of the image display apparatus 10, the controller 11 may control the communication interface 15 to transmit an error message to the external apparatus 30.

The controller 11 may determine whether the channel packet corresponding to the virtual channel has been updated. When the channel packet has been updated, the controller 11 may control the communicator 15 to receive the channel packet from the external apparatus 30 again and may control the storage 13 to store the received channel packet. According to an embodiment, the controller 11 may determine whether the channel packet has been updated, by using a channel packet number included in the channel packet.

According to an embodiment, when a channel name corresponding to the stored channel packet is not included in the channel packet list received from the external apparatus 30, the controller 11 may delete the channel packet and may remove a virtual channel corresponding to the channel packet from the channel list.

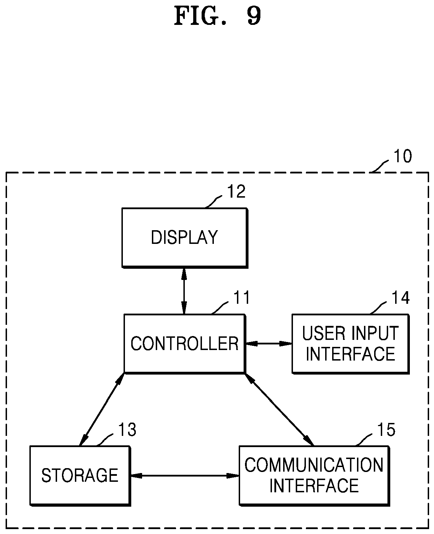

FIG. 9 is a block diagram of a structure of the image display apparatus 10 according to an embodiment.

Referring to FIG. 9, the image display apparatus 10 according to an embodiment may further include a display 12 and a user input interface 14 in addition to the communication interface 15, the storage 13, and the controller 11.

With regard to the communication interface 15, the controller 15, and the storage 13, elements and features as described with reference to FIG. 8 will not be repeated.

According to an embodiment, the controller 11 may process an image signal and transmit the processed image signal to the display 12. Accordingly, an image corresponding to the processed image signal may be displayed on the display 12. The controller 11 may control the image display apparatus 10 via a user command detected by the user input interface 14 or an internal program.

According to an embodiment, the controller 11 may obtain a plug-in instance from a channel packet. The controller 11 may execute the plug-in instance and may control the display 12 to display content corresponding to a virtual channel. According to an embodiment, the plug-in instance may be used to call a function of the image display apparatus 10 for reproducing the content. For example, the plug-in instance may be used to read local or network resources and display the content corresponding to the virtual channel by using a layer or a local graphic system of the image display apparatus 10.

According to an embodiment, the controller 11 may control the display 12 to display the content corresponding to the virtual channel, based on a reproduction time period. For example, when the reproduction time period has lapsed, the controller 11 may stop controlling the display 12 to display the content corresponding to the virtual channel. According to an embodiment, the reproduction time period may be included in channel attribute information of the virtual channel, and the controller 11 may obtain the channel attribute information from the storage 13.

According to an embodiment, the controller 11 may control the display 12 to display the channel attribute information, such as the channel icon, the channel number, and the channel name.

The controller 11 may obtain an additional file of the virtual channel from the channel packet and may control the display 12 to display the content corresponding to the virtual channel, based on resources included in the additional file.

According to an embodiment, the display 12 may generate a driving signal by converting an image signal, a data signal, an on-screen display (OSD) signal, and a control signal that are processed by the controller 11. The display 12 may be a plasma display panel (PDP), a liquid-crystal display (LCD), an organic light-emitting device (OLED), a flexible display, or a three-dimensional (3D) display. For example, the display 12 may display channel attribute information including at least one of the channel icon, the channel number, the channel name, and the reproduction time period.

According to an embodiment, the user input interface 14 may sense a user input and transmit a signal corresponding to the sensed user input to the controller 11. The user input interface 14 may sense a user input, such as, turning power on/off, selecting channels, or moving up/down through channels, and setting a screen, from a control apparatus, such as a remote controller. For example, the user input interface 14 may receive a channel switch command requesting a channel switch to the virtual channel from a user and may transmit a signal corresponding to the received channel switch command to the controller 11. According to an embodiment, the user input interface 14 may also sense a user input for moving a cursor displayed on the display 12.

The block diagrams of the image display apparatuses 10 shown in FIGS. 8 and 9 are only embodiments. Components illustrated in FIGS. 8 and 9 may be combined or omitted according to the specifications of an image display apparatus when being actually implemented, or additional components may be included in the block diagrams of FIGS. 8 and 9. In other words, two or more components may be combined into a single component, or a single component may be divided into two or more components. A function performed in each block is merely an example to explain embodiments, and a detailed operation or device of each block does not limit the scope of the embodiments.

A computer readable storage medium may have embodied thereon at least one program including instructions for performing a method of managing a channel list, according to an embodiment. Examples of the computer-readable recording medium include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device specially configured to store and execute program commands such as a ROM, a random-access memory (RAM), or a flash memory. Examples of the program instructions are high-level programming languages that can be executed by a computer by using an interpreter or the like as well as machine codes made by a compiler.

While one or more embodiments have been described with reference to the figures, it will be understood by those of ordinary skill in the art that various changes in form and details may be made therein without departing from the spirit and scope as defined by the following claims.

## Claims

1. A method of operating an image display apparatus, the method comprising:
receiving a channel packet corresponding to a virtual channel from an external apparatus via a network and storing the received channel packet;
obtaining channel attribute information of the virtual channel from the channel packet; and
adding the virtual channel to a channel list including a normal channel by using the channel attribute information.

2. The method of claim 1, further comprising:
receiving, from the external apparatus, a channel packet list including respective channel packet numbers and respective channel names of channel packets stored in the external apparatus; and
determining a virtual channel having a channel name included in the received channel packet list but not included in the channel list, by comparing the received channel packet list with the channel list,
wherein the receiving of the channel packet corresponding to the virtual channel from the external apparatus via the network and the storing of the received channel packet comprises receiving, from the external apparatus, a channel packet corresponding to the virtual channel having the channel name included in the received channel packet list but not included in the channel list and storing the received channel packet.

3. The method of claim 1, wherein the adding of the virtual channel to the channel list including the normal channel by using the channel attribute information further comprises:
determining whether a channel number of the virtual channel is included in the channel list; and
transmitting an error message to the external apparatus when the channel number is included in the channel list.

4. The method of claim 1, further comprising:
obtaining, from the channel packet, a plug-in instance for displaying content corresponding to the virtual channel;
receiving a channel switch command requesting to switch to the virtual channel; and
displaying the content corresponding to the virtual channel by executing the plug-in instance, in response to the channel switch command.

5. The method of claim 1, further comprising:
receiving a channel switch command requesting to switch to the virtual channel;
determining whether the channel packet corresponding to the virtual channel has been updated; and
receiving the channel packet from the external apparatus again and updating the re-received channel packet, when the channel packet has been updated.

6. The method of claim 5, wherein the determining of whether the channel packet has been updated comprises determining whether the channel packet has been updated, by using a channel packet number included in the channel packet.

7. The method of claim 1, further comprising:
receiving, from the external apparatus, a channel packet list including respective channel packet numbers and respective channel names of channel packets stored in the external apparatus; and
deleting the channel packet and removing the virtual channel from the channel list, when a channel name included in the received and stored channel packet is not included in the received channel packet list.

8. The method of claim 1, wherein
the channel attribute information comprises a reproduction time period of content corresponding to the virtual channel, and
the method further comprises:
receiving a channel switch command requesting to switch to the virtual channel; and
displaying the content corresponding to the virtual channel, based on the reproduction time period, in response to the channel switch command.

9. The method of claim 1, further comprising displaying the channel attribute information including at least one of a channel icon, a channel number, a channel name, and a reproduction time period.

10. The method of claim 1, further comprising:
obtaining an additional file of the virtual channel from the channel packet; and
displaying content corresponding to the virtual channel, based on resources included in the additional file.

11. An image display apparatus comprising:
a communication interface configured to receive a channel packet corresponding to a virtual channel from an external apparatus via a network;
a controller configured to obtain channel attribute information of the virtual channel from the channel packet and add the virtual channel to a channel list including a normal channel by using the channel attribute information; and
a storage configured to store the channel packet and the channel attribute information.

12. The image display apparatus of claim 11, wherein
the communication interface is further configured to receive from the external apparatus a channel packet list including respective channel packet numbers and respective channel names of channel packets stored in the external apparatus, and
the controller is further configured to determine a virtual channel having a channel name included in the received channel packet list but not included in the channel list, by comparing the received channel packet list with the channel list, and to control the communication interface to receive, from the external apparatus, a channel packet corresponding to the determined virtual channel.

13. The image display apparatus of claim 11, further comprising a display configured to display content corresponding to the virtual channel,
wherein the controller is further configured to obtain, from the channel packet, a plug-in instance for displaying the content corresponding to the virtual channel, execute the plug-in instance, and control the display to display the content corresponding to the virtual channel.

14. The image display apparatus of claim 11, further comprising a user input interface configured to receive a channel switch command requesting to switch to the virtual channel,
wherein the controller is further configured to determine whether the channel packet corresponding to the virtual channel has been updated, control the communication interface to receive the channel packet from the external apparatus again, when the channel packet has been updated, and control the storage to store the re-received channel packet.

15. A non-transitory computer-readable recording medium having recorded thereon at least one program including instructions for performing the method of claim.
